# EUROPÄISCHE PATENTSCHRIFT

(11) **EP 2 920 245 B1**
(45) Veröffentlichungstag und Bekanntmachung des Hinweises auf die Patenterteilung: **11.01.2017**
(21) Anmeldenummer: 13792625.9
(22) Anmeldetag: 08.11.2013
(51) Int. Cl.: C08L 67/00, C08G 63/00, C08J 5/18, C08K 3/00

(54) **BIOLOGISCH ABBAUBARE POLYESTERMISCHUNG**
BIODEGRADABLE POLYESTER COMPOSITION
MÉLANGE DE POLYESTER BIODÉGRADABLE

(30) Priorität: 15.11.2012 EP 12192804
(43) Veröffentlichungstag der Anmeldung: 23.09.2015
(73) Patentinhaber: BASF SE, 67056 Ludwigshafen am Rhein (DE)
(72) Erfinder: YANG, Xin, 201204 Shanghai (CN); AUFFERMANN, Jörg, 67251 Freinsheim (DE); SINKEL, Carsten, 68163 Mannheim (DE); LOHMANN, Jerome, 76829 Landau (DE); LOOS, Robert, 67067 Ludwigshafen (DE); SKUPIN, Gabriel, 67346 Speyer (DE); KÜNKEL, Andreas, 67434 Neustadt (DE); BÖRGER, Lars, 67063 Ludwigshafen (DE)
(74) Vertreter: BASF IP Association
(86) Internationale Anmeldenummer: PCT/EP2013/073339
(87) Internationale Veröffentlichungsnummer: WO 2014/075997

(56) Entgegenhaltungen:
- EP-A1- 2 522 695
- WO-A1-2011/054892
- WO-A1-2012/113744

## Beschreibung

Die vorliegende Erfindung betrifft eine biologisch abbaubare Polyestermischung enthaltend:
i) 71 bis 91 Gew.-%, bezogen auf das Gesamtgewicht der Komponenten i und ii, eines Polyesters I, der aufgebaut ist aus:
   a-1) 40 bis 70 Gew.-%, bezogen auf das Gesamtgewicht der Komponenten a und b, einer aliphatischen C₉-C₁₈-Dicarbonsäure oder eines C₉-C₁₈-Dicarbonsäure-Derivats;
   b-1) 30 bis 60 Gew.-%, bezogen auf das Gesamtgewicht der Komponenten a und b, Terephthalsäure oder eines Terephthalsäurederivats;
   c-1) 98 bis 100 Gew.-%, bezogen auf das Gesamtgewicht der Komponenten a und b, eines C₃-C₆-Diols;
   d-1) 0 bis 2 Gew.-%, bezogen auf das Gesamtgewicht der Komponenten a und b, eines mindestens dreiwertigen Alkohols;
   e-1) 0 bis 2 Gew.-%, bezogen auf das Gesamtgewicht der Komponenten a bis e, eines Kettenverlängerers; und
ii) 9 bis 29 Gew.-%, bezogen auf das Gesamtgewicht der Komponenten i und ii, eines Polyesters II, der aufgebaut ist aus:
   a-2) 40 bis 70 Gew.-%, bezogen auf das Gesamtgewicht der Komponenten a und b, einer aliphatischen C₄-C₆-Dicarbonsäure oder eines C₄-C₆-Dicarbonsäure-Derivats;
   b-2) 30 bis 60 Gew.-%, bezogen auf das Gesamtgewicht der Komponenten a und b, Terephthalsäure oder eines Terephthalsäurederivats;
   c-2) 98 bis100 Gew.-%, bezogen auf das Gesamtgewicht der Komponenten a und b, eines C₃-C₆-Diols;
   d-2) 0 bis 2 Gew.-%, bezogen auf das Gesamtgewicht der Komponenten a und b, eines mindestens dreiwertigen Alkohols;
   e-2) 0 bis 2 Gew.-%, bezogen auf das Gesamtgewicht der Komponenten a bis e, eines Kettenverlängerers.

Weiterhin betrifft die Erfindung die Verwendung dieser Polyestermischungen.

Biologisch abbaubare Polyester wie Polybutylenadipat-co-terephthalat (PBAT) sind beispielsweise aus der WO-A 96/015173 bekannt. In der WO-A 2010/034710 werden Polyester wie Polybutylensebacat-co-terephthalat (PBSeT) beschrieben.

Unter biologischer Abbaubarkeit wird in diesen Schriften die Kompostierbarkeit nach DIN EN 13432 verstanden. Die Kompostierung bezieht sich auf den Abbau in industriellen Kompostieranlagen und bedeutet, dass sich ein Material nach einer festgeschriebenen Zeit unter definierten Temperatur-, Sauerstoff-, und Feuchtebedingungen in der Anwesenheit von Mikroorganismen zu mehr als 90 Prozent zu Wasser, Kohlendioxid und Biomasse abgebaut haben muss.

Eine Hausgartenkompostierung läuft in der Regel bei niedriger Temperatur ab, sodass die Verrottungszeiten des Gartenabfalls und entsprechend die Abbauraten des zu untersuchenden Kunststoffs deutlich länger sind. Ein internationaler standardisierter Test für die Hausgartenkompostierung ist die ISO 20200 (2004).

Zur Bestimmung der vollständigen aeroben biologischen Abbaubarkeit im Boden wurde die DIN EN ISO 17556 entwickelt. Der vollständige Bodenabbau ist insbesondere für Kunststoffanwendungen im Agrarsektor wie beispielsweise Mulchfolien, Abdeckfolien, Silo-Folien, Folienbändchen, Geweben, Vlies-Stoffen, Clips, Textilien, Zwirnen, Fischernetzen, Umverpackungen, Schwergutsäcken und Blumentöpfen von großer Bedeutung. Auch an Schaumanwendungen wie zur Bodenbelüftung ist zu denken. Die literaturbekannten Polyester können hinsichtlich ihres Abbaus im Boden die gestellten Anforderungen nicht immer erfüllen.

Ziel der vorliegenden Erfindung war es demnach Polymere bereitzustellen, die auf der einen Seite die materialtechnischen Voraussetzungen für moderne Extrusions- und Spritzgussanwendungen erfüllen und gleichzeitig über einen gegenüber den Einzelkomponenten: Polyester I und Polyester II verbesserten bzw. beschleunigten Abbau im Boden verfügen.

Demgemäß wurde die eingangs erwähnte, biologisch abbaubare Polyestermischung gefunden, enthaltend:
i) 71 bis 91 Gew.-%, bezogen auf das Gesamtgewicht der Komponenten i und ii, eines Polyesters I, der aufgebaut ist aus:
   a-1) 40 bis 70 Gew.-%, bezogen auf das Gesamtgewicht der Komponenten a und b, einer aliphatischen C₉-C₁₈-Dicarbonsäure oder eines C₉-C₁₈-Dicarbonsäure-Derivats;
   b-1) 30 bis 60 Gew.-%, bezogen auf das Gesamtgewicht der Komponenten a und b, Terephthalsäure oder eines Terephthalsäurederivats;
   c-1) 98 bis 100 Gew.-%, bezogen auf das Gesamtgewicht der Komponenten a und b, eines C₃-C₆-Diols;
   d-1) 0 bis 2 Gew.-%, bezogen auf das Gesamtgewicht der Komponenten a und b, eines mindestens dreiwertigen Alkohols;
   e-1) 0 bis 2 Gew.-%, bezogen auf das Gesamtgewicht der Komponenten a bis e, eines Kettenverlängerers; und
ii) 9 bis 29 Gew.-%, bezogen auf das Gesamtgewicht der Komponenten i und ii, eines Polyesters II, der aufgebaut ist aus:
   a-2) 40 bis 70 Gew.-%, bezogen auf das Gesamtgewicht der Komponenten a und b, einer aliphatischen C₄-C₆-Dicarbonsäure oder eines Dicarbonsäure-Derivats;
   b-2) 30 bis 60 Gew.-%, bezogen auf das Gesamtgewicht der Komponenten a und b, Terephthalsäure oder eines Terephthalsäurederivats;
   c-2) 98 bis100 Gew.-%, bezogen auf das Gesamtgewicht der Komponenten a und b, eines C₃-C₆-Diols;
   d-2) 0 bis 2 Gew.-%, bezogen auf das Gesamtgewicht der Komponenten a und b, eines mindestens dreiwertigen Alkohols;
   e-2) 0 bis 2 Gew.-%, bezogen auf das Gesamtgewicht der Komponenten a bis e, eines Kettenverlängerers.

Biologisch abbaubare Polyesterfolien können beispielsweise als Mulchfolien eingesetzt werden. Hier ist neben dem Erfordernis der hohen Weiterreißfestigkeit die Stabilität gegenüber Sonnenlicht insbesondere für transparente Mulchfolien entscheidend. Schwarz (Ruß) eingefärbte Mulchfolien verfügen bereits über einen UV absorbierten Effekt, allerdings wird auch die Wärmestrahlung absorbiert wodurch weniger Wärme bis zum Boden durchgelassen wird und somit zumindest für bestimme Anbauprodukte wie z.B. Melonen, Mais ein höhere Ausbeute/Ernteverfrühung erreicht werden kann.

Aus WO 2009/071475 sind Mulchfolien auf Basis von beispielsweise Polyethylen bekannt, die Hydroxyphenyl-Triazine als Stabilisator enthaltenBiologisch abbaubare Polyesterfilme werden in der WO 2009/071475 nicht explizit beschrieben. Biologisch abbaubare transparente Mulchfolien auf Basis eines biologisch abbaubaren Polyesters bestehend aus aliphatischen und/oder aromatischen Dicarbonsäuren und aliphatischen Dihydroxyverbindung weisen in der Praxis häufig eine zu kurze Standzeit, je nach Wanddicke, von nur 2 Wochen auf. Für die UV- Stabilisation von Mulchfolien werden üblicherweise Lichtschutzmittel wie UV Absorber und HALS Stabilisatoren oder eine Kombination von beiden empfohlen. UV Absorber filtern den ultravioletten Anteil aus dem Licht, wodurch die Energie des absorbierten Lichts in Wärme umgewandelt wird. Durch den Einsatz von HALS Stabilisatoren wird die Reaktion von photooxidativ gebildeten Spaltprodukten im Polymer unterbunden. Durch die Kombination der genannten Wirkstoffe wird ein synergistischer Effekt zur Eindämmung der beiden unterschiedlichen Schadensmechanismen erreicht. Untersuchungen an teilaromatischer Polyester der Marke ecoflex^{®} (BASF SE) haben ergeben, dass Hydroxy-Phenyl-Triazin basierte UV Absorber wie Tinuvin^{®} 1577 auch in Kombination mit einem HALS Stabilisator wie Tinuvin^{®} 111 oder UV Absorber auf Basis Benzophenone wie Uvinul^{®} 3008, zu einer gewissen stabilisierenden Wirkung führt, die aber für transparente Mulchfolien, insbesondere mit geringer Wandstärke, bei weitem nicht ausreichend ist.

Weiterhin können diese Mulchfolien vor allem in dünnen Ausführungsformen (unter 30 microns) hinsichtlich ihrer Weiterreißfestigkeit nicht überzeugen.

Ziel der vorliegenden Erfindung war es demnach weiterhin biologisch abbaubare, bevorzugt transparente Mulchfolien mit längeren Standzeiten im Feld (über der Erde), höherer Weiterreißfestigkeit und gleichzeitig vollständigen Abbau im Boden (unter der Erde) bereitzustellen.

Demnach wurde eine Polyestermischung entwickelt, die neben der erfindungsgemäßen Komponenten i und ii, den UV-Absorber 2-(4,6-Bis-biphenyl-4-yl-1,3,5-triazin-2-yl)-5-(2-ethyl-(n)-hexyloxy)phenol enthält, und für Agraranwendungen besonders geeignet ist.

Im Folgenden wird die Erfindung näher beschrieben.

Prinzipiell kommen für die Herstellung der erfindungsgemäßen biologisch abbaubaren Polyestermischungen als Komponente i alle Polyester I und als Komponente ii alle Polyester II auf Basis von aliphatischen und aromatischen Dicarbonsäuren und aliphatischen Dihydroxyverbindung, sogenannte teilaromatische Polyester in Betracht. Gemeinsam ist diesen Polyestern, dass sie biologisch abbaubar nach DIN EN 13432 sind. Im Wesentlichen unterscheiden sich die Polyester I und II in der Kettenlänge der aliphatischen Dicarbonsäure a.

Unter teilaromatischen Polyestern (Komponente i und ii) sollen erfindungsgemäß auch Polyesterderivate verstanden werden, die zu einem geringen Anteil Teilstrukturen wie Polyetherester, Polyesteramide, Polyetheresteramide oder Polyesterurethane aufweisen. Zu den geeigneten teilaromatischen Polyestern gehören lineare Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO-A 2010/034710).

Die Herstellung der erfindungsgemäßen Polyester I und II erfolgt vorzugweise nach dem in WO 2009/127556 beschriebenen Verfahren. Das dort beschriebene Verfahren ist insofern geeignet, als es durch die schonende Fahrweise Polyester mit hoher Viskosität und gleichzeitig niedriger Säurezahl zugänglich macht. Die niedrige Säurezahl ist Voraussetzung für die effektive Umsetzung mit Diisocyanaten, sodass sich die erfindungsgemäßen, niedrigen MVR-Werte einfach und prozessfähig einstellen lassen. Polyester mit einer Schmelzvolumenrate (MVR) nach EN ISO 1133 (190°C, 2,16 kg Gewicht) von 0,5 bis 6,0 cm³/10min, insbesondere von 0,8 bis 5 cm³/10min haben sich als besonders geeignet zur Herstellung sehr dünner, weiterreißfester Folien mit gleichzeitig hoher Durchstoßfestigkeit.

Im Folgenden wird das in WO 2009/127556 beschriebene, kontinuierliche Verfahren näher erläutert. Hierbei wird beispielsweise eine Mischung aus 1,4-Butandiol, Sebazinsäure,Terephthalsäure und gegebenenfalls weiteren Comonomeren, ohne Zugabe eines Katalysators, zu einer Paste vermischt oder alternativ die flüssigen Ester der Dicarbonsäuren und die Dihydroxyverbindung und gegebenenfalls weiteren Comonomeren, ohne Zugabe eines Katalysators, in den Reaktor eingespeist und
1. in einer ersten Stufe diese Mischung zusammen mit der Gesamtmenge oder einer Teilmenge des Katalysators kontinuierlich verestert bzw. umgeestert;
2. in einer zweiten Stufe gegebenenfalls mit der Restmenge Katalysator kontinuierlich das gemäß 1.) erhaltene Umesterungs- bzw. Veresterungsprodukt - vorzugsweise in einem Turmreaktor, wobei der Produktstrom im Gleichstrom über eine Fallfilmkaskade geführt wird und die Reaktionsdämpfe in situ aus dem Reaktionsgemisch entfernt werden - bis zu einer Viskositätszahl nach DIN 53728 von 20 bis 60 mL/g vorkondensiert;
3. in einer dritten Stufe kontinuierlich das aus 2.) erhältliche Produkt - vorzugsweise in einem Käfigreaktor - bis zu einer Viskositätszahl nach DIN 53728 von 70 bis 130 mL/g polykondensiert und
4. in einer vierten Stufe kontinuierlich das aus 3.) erhältliche Produkt bis zu einer Viskositätszahl nach DIN 53728 von 160 bis 250 mL/g in einer Polyadditionsreaktion mit einem Kettenverlängerer in einem Extruder, List-Reaktor oder statischen Mischer umgesetzt.

Mit dem in WO 2009/127556 beschriebenen kontinuierlichen Verfahren sind aliphatisch-aromatische Polyester mit einer Säurezahl gemessen nach DIN EN 12634 von kleiner als 1,0 mg KOH/g und einer Viskositätszahl von größer 130 mL/g, sowie einer MVR nach ISO 1133 von kleiner/gleich 6 cm³/10 min (190°C, 2,16 kg Gewicht) zugänglich.

Die Polyester I sind vorzugsweise wie folgt aufgebaut:
a-1) 40 bis 70 Gew.-%, bezogen auf das Gesamtgewicht der Komponenten a und b, einer aliphatischen C₉-C₁₈-Dicarbonsäure oder eines C₉-C₁₈-Dicarbonsäure-Derivats;
b-1) 30 bis 60 Gew.-%, bezogen auf das Gesamtgewicht der Komponenten a und b, Terephthalsäure oder eines Terephthalsäurederivats;
c-1) 98 bis 100 Gew.-%, bezogen auf das Gesamtgewicht der Komponenten a und b, eines C₃-C₆-Diols;
d-1) 0 bis 2 Gew.-%, bezogen auf das Gesamtgewicht der Komponenten a und b, eines mindestens dreiwertigen Alkohols;
e-1) 0 bis 2 Gew.-%, bezogen auf das Gesamtgewicht der Komponenten a bis e, eines Kettenverlängerers.

Der Begriff C₉-C₁₈-Dicarbonsäure (Komponente a-1) bedeutet vorzugsweise Azelainsäure, Sebazinsäure, Brassylsäure, 1,18-C₁₈-Dicarbonsäure oder die entsprechenden Dicarbonsäurederivate. Sebazinsäure und ihre Dervate sind als Komponente a-1 besonders gut geeignet. Die obengenannten Dicarbonsäuren sind heute aus nachwachsenden Rohstoffen zugänglich.

Aliphatische Dicarbonsäure (a) und Terephthalsäure (b) können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

In der Regel wird zu Beginn der Polymerisation das Diol (c) zu den Disäuren (a und b) in einem Verhältnis von Diol zu Disäuren von 1,0 bis 2,5 : 1 und vorzugsweise 1,3 bis 2,2 : 1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,0 : 1 verstanden.

Als mindestens dreiwertige Alkohole (d) kommen beispielsweise 1,1,1-Trimethylolpropan, 1,1,1-Trimethylolethan; Pentaerythrit; Polyethertriole und insbesondere Glycerin in Frage. Mittels der Komponenten d lassen sich biologisch abbaubare Polyester i mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen.

Kettenverlängerer e stellen polyfunktionelle und insbesondere difunktionelle Isocyanate, Isocyanurate, Oxazoline, Carbonsäureanhydrid oder Epoxide dar.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Munder Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

Als bifunktionelle Kettenverlängerer e eignen sich die folgenden Verbindungen:
Unter einem aromatischen Diisocyanat werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

2,2'-Bisoxazoline sind im Allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Die Polyester I weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die Polyester I weisen in der Regel eine Schmelzvolumenrate (MVR) nach EN ISO 1133 (190°C, 2,16 kg Gewicht) von 0,5 bis 10,0 cm³/10min, vorzugsweise von 0,8 bis 5 cm³/10min auf.

Polyester II ist wie folgt zusammengesetzt:
a-2) 40 bis 70 Gew.-%, bezogen auf das Gesamtgewicht der Komponenten a und b, einer aliphatischen C₄-C₆-Dicarbonsäure oder eines C₄-C₆-Dicarbonsäure-Derivats;
b-2) 30 bis 60 Gew.-%, bezogen auf das Gesamtgewicht der Komponenten a und b, Terephthalsäure oder eines Terephthalsäurederivats;
c-2) 98 bis100 Gew.-%, bezogen auf das Gesamtgewicht der Komponenten a und b, eines C₃-C₆-Diols;
d-2) 0 bis 2 Gew.-%, bezogen auf das Gesamtgewicht der Komponenten a und b, eines mindestens dreiwertigen Alkohols;
e-2) 0 bis 2 Gew.-%, bezogen auf das Gesamtgewicht der Komponenten a bis e, eines Kettenverlängerers.

Die Polyester II unterscheiden sich von den Polyestern I im Wesentlichen durch die Kettenlänge der Dicarbonsäure (Komponente a). Die Dicarbonsäurekomponente a-2 ist kurzkettiger als die Dicarbonsäurekomponente a-1. Unter C₄-C₆-Dicarbonsäure wird Bernsteinsäure, Glutarsäure und insbesondere bevorzugt Adipinsäure verstanden. Die Dicarbonsäuren Bernsteinsäure und Adipinsäure sind heute aus nachwachsenden Rohstoffen zugänglich. Die restlichen Definitionen b-2, c-2, d-2, e-2 des Polyesters II entsprechen den zuvor gegebenen Definitionen b-1, c-1, d-1, e-1 des Polyesters I.

Die Herstellung der Polyester II kann beispielsweise nach den zuvor beschriebenen Methoden erfolgen. Gegebenenfalls kann bei der Herstellung der Polyester II weniger Kettenverlängerer e eingesetzt werden bzw. auf den Kettenverlängerer e ganz verzichtet werden. Auch können mildere Reaktionsbedingungen oder kürzere Reaktionszeiten bei dem zuvor beschriebenen und aus WO 2009/127556 bekannten Verfahren eingestellt werden, um eine Schmelzvolumenrate (MVR) nach EN ISO 1133 (190°C, 2,16 kg Gewicht) von beispielsweise 0,5 bis 10,0 cm³/10min zu realisieren. Insbesondere ist unter teilaromatischen Polyestern II Polybutylenadipat-coterephthalat (PBAT) zu verstehen. PBAT-Handelsprodukte wie ecoflex^{®} F(BASF SE) und Eastar^{®} Bio, Origo-Bi^{®} (Novamont) sind bevorzugte Polyester II.

Die verbesserte biologische Abbaubarkeit im Boden tritt insbesondere dann auf wenn Polyester I in der erfindungsgemäßen Polyestermischung die kontinuierliche oder cokontinuierliche Phase ausbildet, und insbesondere das Mischungsverhältnis Polyester I zu Polyester II wie folgt ist:
Die Polyestermischungen enthaltend 71 bis 91 Gew.-%, besonders bevorzugt 80 bis 90 Gew.-%, bezogen auf die Komponenten i und ii, des Polyesters I und 9 bis 29 Gew.-%, besonders bevorzugt 10 bis 20 Gew.-%, bezogen auf die Komponenten i und ii, des Polyester II.

In dem beanspruchten Mischungsverhältnis zeigt die erfindungsgemäße Polymermischung eine verbesserte biologische Abbaubarkeit im Boden nach DIN EN ISO 17556 im Vergleich zu den jeweiligen Einzelkomponenten: Polyester I und Polyester II.

Der Zusatz des Polyesters II zu den erfindungsgemäßen Mischungen führt weiterhin zu einer Verbesserung der Durchstoßfestigkeit. Dieser Effekt ist besonders ausgeprägt in gefüllten Polyestermischungen, wenn zusätzlich 5 bis 25 Gew.-%, bezogen auf das Gesamtgewicht der Polymermischung, Polymilchsäure verwendet werden.

Eine exzellente Weiterreißfestigkeit und eine hohe Durchstoßfestigkeit wird beobachtet bei Polymermischungen, deren Polyestern I mit einer Schmelzvolumenrate (MVR) nach EN ISO 1133 (190°C, 2,16 kg Gewicht) von 0,5 bis 2,0 cm³/10min und Polyestern II mit einer Schmelzvolumenrate (MVR) nach EN ISO 1133 (190°C, 2,16 kg Gewicht) von 2,5 bis 10,0 cm³/10min und 10 bis 35 Gew.-%, bezogen auf das Gesamtgewicht der Polymermischung, Füllstoffe wie vorzugsweise Calciumcarbonat und Talk.

Die Polyestermischung kann demnach noch weitere Inhaltsstoffe enthalten. Die Polyestermischung einschließlich aller weiteren Inhaltsstoffe wird im Folgenden Polymermischung genannt.

Calciumcarbonat kann beispielsweise in 10 bis 25 Gew.-%, bevorzugt 10 bis 20 Gew.-%, besonders bevorzugt 12 bis 28 Gew.-%, bezogen auf das Gesamtgewicht der Polymermischung, eingesetzt werden. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2,5 Mikrometern auf.

Talk kann beispielsweise in 3 bis 15 Gew.-%, bevorzugt 5 bis 10 Gew.-%, besonders bevorzugt 5 bis 8 Gew.-%, bezogen auf das Gesamtgewicht der Polymermischung, eingesetzt werden. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Neben den Füllstoffen Calciumcarbonat und Talk können noch weitere Mineralien enthalten sein wie: Graphit, Gips, Ruß, Eisenoxid, Calciumchlorid, Kaolin, Siliziumdioxid (Quarz), Natriumcarbonat, Titandioxid, Silikat, Wollastonit, Glimmer, Montmorellonite, Mineralfasern und Naturfasern.

Naturfasern sind in der Regel Cellulosefasern, Kenaffasern, Hanffasern, Holzmehl oder Kartoffelschalen. Sie werden vorzugsweise in 1 bis 20 Gew.-% bezogen auf die Polymermischung eingesetzt.

Die Minerialien inklusive der Füllstoffe Calciumcarbonat und Talk können auch als Nanofüllstoffe eingesetzt werden. Nanofüllstoffe sind insbesondere feinteilige Schichtsilikate, bevorzugt Tonmineralien, besonders bevorzugt Montmorillonit enthaltend Tonmineralien, deren Oberfläche mit einem oder mehreren quarternären Ammoniumsalzen und/oder Phosphoniumsalzen und/oder Sulfoniumsalzen modifiziert sind. Als Tonmineralien bevorzugt sind natürliche Montmorillonite und Bentonite.

Insgesamt können den Polyestermischungen beispielsweise Füllstoffe in 10 bis 35 Gew.-%, bezogen auf das Gesamtgewicht der Polymermischung, zugesetzt werden.

In einer bevorzugten Ausführungsform können den Polyestermischungen noch weitere Polymere ausgewählt aus der Gruppe bestehend aus: Polymilchsäure (PLA), Polycaprolacton (PCL), Polyhydroxyalkanoat, Stärke oder Polyester, hergestellt aus aliphatischen Dicarbonsäuren und einer aliphatischen Dihydroxyverbindung zugesetzt werden.

Polymilchsäure wird vorzugsweise in einer Menge von 5 bis 25 Gew.-%, besonders bevorzugt von 6 bis 12 Gew.-%, bezogen auf das Gesamtgewicht der Polymermischung, zugesetzt.

PLA mit dem folgenden Eigenschaftsprofil wird bevorzugt eingesetzt:
- einer Schmelzvolumenrate (MVR) nach EN ISO 1133 (190°C, 2,16 kg Gewicht) von 0.5 bis 30 insbesondere 2 bis 40 cm³/10min)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise Ingeo® 8052D, 6201 D, 6202D, 6251 D, 3051 D und insbesondere Ingeo® 4020D, 4032D oder 4043D (Polylmilchsäure der Fa. NatureWorks).

Durch den Zusatz von PLA im beanspruchten Mengenbereich können die Eigenschaften der Polyesterfolie (Durchstoßfestigkeit und Weiterreißfestigkeit) hergestellt aus der Polymermischung nochmal deutlich verbessert werden. Es können auch Mischungen von leichtfließendem und höher viskosem PLA eingesetzt werden.

Weiterhin können aliphatischen Polyester vorzugsweise in 5 bis 45 Gew.-%, bezogen auf das Gesamtgewicht der Polymermischung eingesetzt werden.

Unter aliphatischen Polyestern werden auch Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyester mit einer Polyesteramid- oder Polyesterurethan-Teilstruktur verstanden. Die aliphatischen Polyester werden beispielsweise von den Firmen Showa Highpolymers unter dem Namen Bionolle und von Mitsubishi unter dem Namen GSPla vermarktet. Neuere Entwicklungen sind in der WO-A 2010/034711 beschrieben.

Ähnliche Effekte findet man, wenn zu den Polyesterfolien 10 bis 35 Gew.-%, bezogen auf das Gesamtgewicht der Polymermischung, eines Polyhydroxyalkanoats oder Stärke zugesetzt werden.

Unter Polyhydroxyalkanoaten werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle® und von der Fa. Tianan unter dem Namen Enmat® vertrieben. Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate-co-3-hydroxyhexanoate weisen in der Regel einen 3-Hydroxyhexanoatanteil von 1 bis 20 und vorzugsweise von 3 bis 15 mol% bezogen auf das Polyhydroxyalkanoat auf. Die Polyhydroxyalkanoate weisen in der Regel ein Molekulargewicht Mw von 100.000 bis 1.000.000 und vorzugsweise von 300.000 bis 600.000 auf.

Unter Stärke wird auch Amylose verstanden; thermoplastifiziert bedeutet mit Weichmachern wie beispielsweise Glycerin, Sorbit oder Wasser thermoplastifiziert (siehe EP-A 539 541, EP-A 575 349, EP-A 652 910) oder auch oberflächenmodifiziert (siehe EP-A 937120, EP-A 947559, EP-A 965615). Erfindungsgemäße Polymermischungen, die 10 bis 35 Gew.-%, bezogen auf das Gesamtgewicht der Polymermischung, an thermoplastischer oder nicht thermoplastischer Stärke enthalten, weisen sowohl eine gute Abbaubarkeit im Boden als auch gute mechanische Eigenschaften wie insbesondere eine hohe Weiterreißfestigkeit auf. Diese stärkehaltigen Mischungen sind daher eine interessante Alternative zu den obengenannten Füllstoff-haltigen (Calcium- und/oder Talk-haltigen) gegebenenfalls auch in Kombination mit den Füllstoff-haltigen Polymermischungen.

Weiterhin kann die erfindungsgemäße Polyesterfolie weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 2 Gew.-%, insbesondere 0,1 bis 2 Gew.-% bezogen auf die erfindungsgemäße Polyesterfolie eingesetzt. Weichmacher können in 0,1 bis 10 Gew.-% in der erfindungsgemäßen Polyesterfolie enthalten sein.

Als UV-Absober werden vorzugsweise 0,1 bis 1,5 Gew.-%, besonders bevorzugt 0,5 bis 1,2 Gew.-%, bezogen auf das Gesamtgewicht der Polymermischung, 2-(4,6-Bis-biphenyl-4-yl-1,3,5-triazin-2-yl)-5-(2-ethyl-(n)-hexyloxy)phenol eingesetzt. Herstellung und Eigenschaften des UV-Absorber vi sind aus der WO 2009/071475 bekannt. In diesem Zusammenhang sei auf die WO 2009/071475 explizit verwiesen.

Auch können den Polymermischungen, insbesondere den Polymilchsäurehaltigen Mischungen 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis vi, eines Epoxidgruppen-haltigen Copolymers auf Basis Styrol, Acrylsäureester und/oder Methacrylsäureester zugesetzt werden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Besonders geeignet ist Joncryl® ADR 4368. Komponente V wird insbesondere in PLA haltigen Polyestermischungen eingesetzt.

Eine bevorzugte Ausführungsform ist auf biologisch abbaubare Polyestermischungen der folgenden Zusammensetzung gerichtet:
i) 71 bis 91 Gew.-%, vorzugsweise 80 bis 90 Gew.-%, , bezogen auf die Komponenten i und ii, eines Polyesters I;
ii) 9 bis 29 Gew.-%, vorzugsweise 10 bis 20 Gew.-%,, bezogen auf die Komponenten i und ii, eines Polyesters II;
iii) 0 bis 25 Gew.-%, vorzugsweise 10 bis 25 Gew.-%, bezogen auf das Gesamtgewicht der Komponenten i bis vi, Calciumcarbonat;
iv) 0 bis 15 Gew.-%, vorzugsweise 3 bis 10 Gew.-%, bezogen auf das Gesamtgewicht der Komponenten i bis vi, Talk;
v) 0 bis 50 Gew.-%, vorzugsweise 5 bis 45 Gew.-%, bezogen auf das Gesamtgewicht der Komponenten i bis vi, eines oder mehrere Polymere ausgewählt aus der Gruppe bestehend aus: Polymilchsäure, Polycaprolacton, Polyhydroxyalkanoat, Stärke oder Polyester, hergestellt aus aliphatischen Dicarbonsäuren und einer aliphatischen Dihydroxyverbindung; insbesondere bevorzugt sind, 5 bis 25 Gew.-%, bezogen auf das Gesamtgewicht der Komponenten i bis vi, Polymilchsäure;
vi) 0 bis 2 Gew.-%, vorzugsweise 0,1 bis 1,5 Gew.-%, bezogen auf das Gesamtgewicht der Komponenten i bis vi, mindestens eines Stabilisators, Nukleiierungsmit-tels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs, insbesondere bevorzugt ist der UV-Absorbers 2-(4,6-Bis-biphenyl-4-yl-1,3,5-triazin-2-yl)-5-(2-ethyl-(n)-hexyloxy)phenol.

Im Sinne der vorliegenden Erfindung ist das Merkmal "biologisch abbaubar im Boden" für Polymermischungen dann erfüllt, wenn diese Polymermischungen entsprechend DIN EN ISO 17556 einen prozentualen Grad des biologischen Abbaus in 2 Jahren von mindestens 90% aufweisen. Zusätzlich ist noch die Ökotoxikologie der eingesetzten Produkte zu untersuchen und die Schwermetallgrenzen einzuhalten (s. Vicottes "ok biodegradable soil" Certifizierung). Gemessen kann der vollständige aerobe biologische Abbau im Boden durch Messung des Sauerstoffbedarfs in einem Respirometer oder der Menge des entstandenen Kohlendioxids - absolut oder relativ zu Cellulose.

Im Allgemeinen führt die biologische Abbaubarkeit dazu, dass die Polyester-(mischungen) in einer angemessenen und nachweisbaren Zeitspanne in Kohlendioxid, Wasser und Biomasse umgewandelt werden. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden.

Die biologische Abbaubarkeit im Sinne von Kompostierbarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung. Andere Methoden zur Bestimmung der Kompostierbarkeit werden beispielsweise in ASTM D 5338 und ASTM D 6400-4 beschrieben.

Die eingangs genannten biologisch abbaubaren Polyestermischungen sind zur Herstellung von Netzen und Gewebe, Schlauchfolien, Chill-Roll-Folien mit und ohne einer Orientierung in einem weiteren Verfahrensschritt, mit und ohne Metallisierung oder SiOx-Beschichtung geeignet.

Insbesondere eignen sich die eingangs definierten Polyestermischungen enthaltend die Komponenten i) bis vi) für Schlauchfolien und Stretchfolien. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Landwirtschaftsfolien (Mulchfilme), Folienbeutel zur Verpackung von Nahrungsmitteln, abziehbare Verschlussfolie - transparent oder undurchsichtig - schweißbare Verschlussfolie - transparent oder undurchsichtig - , Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko- und Müsliriegel, peelbare Deckelfolien für Molkereiverpackungen (Joghurt, Sahne etc.), Obst und Gemüse, halbharte Verpackungen für geräucherte Wurst und Käse.

Die Polyestermischungen enthaltend die Komponenten i bis vi) weisen nach der Extrusion zu ein- oder mehrlagigen Schlauch-, Cast- oder Pressfolien eine deutlich höhere Reißfestigkeit (gemäß EN ISO 6383-2:2004) auf verglichen mit Mischungen ohne die Komponenten ii bis v). Die Weiterreißfestigkeit ist eine sehr wichtige Produkteigenschaft vor allem im Bereich dünner (Schlauch-)folien für z.B. Biomüllbeutel oder dünnwandige Tragetaschen (z.B. Hemdchentragetaschen, Obstbeutel). Daneben ist sie von besonderer Bedeutung bei Mulchfolien im Agrarbereich.

Die Polyestermischungen enthaltend die Komponenten i bis vi) eignen sich auch für Schaumanwendungen wie beispielsweise zur Bodenbelüftung, für Blumentöpfe oder Behältnisse für Setzlinge.

Mit UV-Absorber (vi) 2-(4,6-Bis-biphenyl-4-yl-1,3,5-triazin-2-yl)-5-(2-ethyl-(n)-hexyloxy)phenol versehene Polyesterfolien kommen insbesondere für Anwendungen, die für den Außenbereich bestimmt sind wie im Bausektor und insbesondere für Agrarprodukte, zum Einsatz. Unter Agrarprodukten werden Mulchfolien, Abdeckfolien, Silo-Folien, Folienbändchen, Gewebe, Vlies-Stoffe, Clips, Textilien, Zwirne, Fischernetze, Umverpackungen wie Schwergutsäcke für beispielsweise Torf, Dünger Zement, Pflanzenschutzmittel, Saatgut oder Blumentöpfe verstanden.
Agrarprodukte sind in der Regel Wind und Wetter und insbesondere dem Sonnenlicht ausgesetzt. Um eine definierte Standzeit im Feld zu gewährleisten, müssen sie stabilisiert werden.

### Anwendungstechnische Messungen:

Die Molekulargewichte Mn und Mw der teilaromatischen Polyester wurde gemäß DIN 55672-1 bestimmt Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards. Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Bestimmungsmethode des MVR beschreiben (notwendige Angaben bzw. Abweichungen zur Durchführung der EN ISO 1133 (190°C, 2,16 kg Gewicht).

Die Weiterreißfestigkeit wurde durch einen Elmendorf-Test gemäß EN ISO 6383-2:2004 mit einem Gerät der Fa. ProTear an Prüfkörpern mit konstantem Radius (43 mm Risslänge) bestimmt.

Der E-Modul und die Reißdehnung wurden mittels eines Zugversuchs an im Blasfolienverfahren hergestellten Folien mit einer Dicke von etwa 30µm gemäß ISO 527-3 bestimmt.

In einem Dart Drop Test Methode A (ASTM D 1709)an Folien mit einer Dicke von 30 µm wurde die maximale Energie ermittelt, die ein auf die Folie fallender Stempel zum Durchstoßen benötigt. Diese Energie wird durch das Gewicht des Stempels in g ausgedrückt, der aus einer bestimmten Höhe auf die Folie fällt und zu einem 50 prozentigen Versagen führt (siehe ASTM im Anhang).

Die Abbauraten der biologisch abbaubaren Polyestermischungen und der zum Vergleich hergestellten Mischungen wurden nach DIN EN ISO 17556 (01.12.2012) bestimmt:
Während des aeroben biologischen Abbaus wurde das Substrat durch mikrobielle Aktivität in Kohlendioxid, Wasser und Biomasse umgewandelt. Die hier beschriebene Testmethode erlaubt es den biologischen Abbau von Polymerproben im Boden quantitativ zu verfolgen.

Das Inokulum bestand aus einer Mischung an natürlichen Böden aus der mit einem 2 mm Sieb grobe Bestandteile ausgesiebt wurden. Der Wassergehalt des Inokulums wurde auf 40 - 60 % der maximalen Wasserhaltekapazität der Bodenmischung eingestellt. Der pH Wert lag zwischen 6 und 8, insbesondere bei 7,2. Die Polymerprobe (Pulver) wurde direkt mit dem Inokulum vermischt (1 g Polymer pro 500 g Boden) und im Reaktor platziert. Der Reaktor enthielt neben einem Gefäß mit Kaliumhydroxidlösung zur Absorption des entstanden Kohlendioxids auch eines mit Wasser, um das Austrocknen des Bodens zu verhindern. Der Reaktor wurde luftdicht verschlossen und bei 25 °C unter Lichtausschluss gelagert.

Die Menge an entstandenem Kohlendioxid wurde mittels Titration bestimmt. Nach jeder Titration wurde die Kaliumhydroxidlösung erneuert, der Boden durchmischt und falls nötig angefeuchtet.

Der biologische Abbau konnte anhand der entstanden Menge an Kohlendioxid berechnet werden. Hierzu musste lediglich die Hintergrundemission (Kohlendioxid Produktion des Inokulums ohne Polymerprobe: Blindprobe) berücksichtigt werden und der organische Kohlenstoffgehalt (TOC) der Polymerprobe bekannt sein.

### I. Eingesetzte Materialien:

### i-1 Polybutylensebacat-co-terephthalat

Dimethylterephthalat (70,11 kg), 1,4-Butandiol (90,00 kg), Glycerin (242.00 g), Tetrabutylorthotitanat (TBOT) (260.00 g) und Sebazinsäure (82.35 kg) wurden in einem 250L Kessel vorgelegt und die Apparatur mit Stickstoff gespült. Methanol wurde bis zu einer Innentemperatur von 200°C abdestilliert. Es wurde auf etwa 160°C abgekühlt und unter Vakuum (<5 mbar) bis zu einer Innentemperatur von 250°C kondensiert. Nach Erreichen der gewünschten Viskosität wurde auf Raumtemperatur abgekühlt. Der Präpolyester hatte ein Viskosität von VZ = 80 mL/g.
Die Kettenverlängerung wurde in einem Haake-Kneter Rheocord 9000 mit einem Rheomix 600 Aufsatz durchgeführt. Der Präpolyester wurde bei 220°C geschmolzen und die Schmelze tropfenweise mit 0.9 Gew.-%, bezogen auf den Polyester I, an HDI (Hexamethenediisocyanat) versetzt. Der Reaktionsfortschritt wurde durch Beobachtung des Drehmoments verfolgt. Die Reaktionsmischung wurde nach Erreichen des maximalen Drehmoments abgekühlt, der kettenverlängerte, biologisch abbaubare Polyester entnommen und charakterisiert. Der Polyester i-1 hatte einen MVR von 1,0 cm³/10min.

### i-2 Polybutylensebacat-co-terephthalat

Der Präpolyester wurde analog Beispiel 1 hergestellt und mit 0.3 Gew.-% an HDI (Hexamethenediisocyanat) versetzt. Der Polyester i-2 hatte einen MVR von 4,6 cm³/10min.

### ii-1 Polybutylenadipat-co-terephthalat

Zur Herstellung des Polyesters ii-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1h langsam zudosiert.

Der so erhaltene Polyester ii-1 wies eine Schmelztemperatur von 119°C und einen MVR von 3,1 cm³/10min.
iii-1) Calciumcarbonat vom Typ "Omyafilm 764 OM" der Fa. OMYA
iv-1) Talk vom Typ "Microtalk IT extra" der Fa. Mondo Minerals
v-1) Polymilchsäure (PLA) Ingeo® 4043D der Firma Natureworks LLC
vi-1) Batch A: 20 Gew.-%iger Masterbatches von Joncryl ADR 4368 in Polyester ii-1 (Herstellung siehe EP-A 1838784)

### II. Compoundierung

Die Polymermischungen der Beispiele 1 bis 4 und Vergleichsbeispiele 1 bis3a wurden in den Mengenverhältnissen wie in den Tabellen 1 und 2 angegeben, gemischt und auf einem Extruder von Coperion ZSK40 MC mit L/D 44 und 11 Zonen compoundiert. Die Gehäusetemperaturen sind zwischen 180 und 210°C und Massetemperatur zwischen 240 und 270°C. Die Komponenten i-1, ii-1, gegebenenfalls v-1, und vi-1 wurden per Coldfeed in Zone 1 dosiert, gegebenenfalls iii-1 per Seitenfeeder in Zone 8 und gegebenenfalls iv-1 per Seitenfeeder in Zone 5 zugegeben. Drehzahl, Durchsatz, und alle anderen Verfahrensparameter wurden für die Compounds entsprechend optimiert.

### III. Folienherstellung:

### Folienblasanlage

Die Schlauchfolienanlage wurde mit einem 25D langen Extruder mit einer 30mm Schnecke betrieben, der mit einer glatten Einzugszone und einer Dreizonenschnecke ausgestattet war. Die Einzugszone wurde bei maximalem Durchsatz von ca. 10-15 kg/h mit kaltem Wasser gekühlt. Die Zonentemperaturen wurden so gewählt, dass die Massetemperatur zwischen 170 und 190 °C lag. Die Düsentemperaturen lagen im Bereich von 160-180 °C. Der Düsendurchmesser betrug 80mm, die Spaltweite 0,8 mm. Das Aufblasverhältnis von 3,5 : 1 ergab eine Liegebreite des Folienschlauchs von ca. 440 mm.

### IV Ergebnisse

**Tabelle 1: Bodenabbau von gemahlenen Polymerpulvern nach DIN EN ISO 17556 gemessen am entstandenen Kohlendioxid**

| Beispiel | 1 | V3 | V4 | V5 | V1 | V2 | Cellulose (Referenz) |
|---|---|---|---|---|---|---|---|
| i-1 [Gew.-%] | 90 | 70 | 50 | 10 | 100 | | |
| ii-1 [Gew.-%] | 10 | 30 | 50 | 90 | | 100 | |
| | | | | | | | |
| Teilchengröße | | | | | | <100 | |
| 100-300 µm | | | | | | µm | |
| Abbau nach 120 Tagen | 46,1 % | 32,7 % | 23,4 % | 3,3 % | 42,4 % | 1,7 %* | 80,0 % |
| Maximal erwarteter Abbau nach 120 Tagen (Annahme: nur i-1 trägt messbar zum Abbau bei) | 38,2 % | 29,7 % | 21,2 % | 4,2 % | - | - | - |
| Differenz zwischen gemessenem und erwartetem Abbau | +7,9 % | +3,0 % | +2,2 % | 0,9 % | - | - | - |

| | | | | | | | |
|---|---|---|---|---|---|---|---|
| *Abbauergebnis nach 118 Tagen, durchgeführt unter den auf Seite 18 beschriebenen Bedingungen (nur kleinere Korngröße) nach DIN EN ISO 17556. | | | | | | | |

Tabelle 1 zeigt den Abbau von Polyester I und Polyester II sowie den Abbau von Mischungen der Polyester I und II im Boden nach DIN EN ISO 17556. Während der reine Polyester I nach 120 Tagen einen Abbau von 42,4 % zeigt, baut der reine Polyester II im Boden praktisch nicht ab. Umso überraschender war, dass die erfindungsgemäße Mischung aus 90 Gew.-% Polyester I und 10 Gew.-% Polyester II (Beispiel 1) sogar schneller im Boden abbaut als der reine Polyester I. Darüber hinaus sieht man, dass bis zu einem Anteil von 50 Gew.-% Polyester II der Abbauwert über dem rechnerisch erwarteten maximalen Abbauwert (= Abbau Polyester I [V1] * Anteil Polyester I in der Mischung) jedoch nicht mehr über dem des Polyesters I liegt. Für die erfindungsgemäßen Polymermischungen liegt ein überraschendes synergistisches Abbauverhalten vor.

**Tabelle 2: Bodenabbau von gemahlenen Polymerpulvern nach DIN EN ISO 17556 gemessen am entstandenen Kohlendioxid**

| Beispiel | 2 | V1-a | Cellulose (Referenz) |
|---|---|---|---|
| i-1 [Gew.-%] | 52,5 | 71,5 | |
| i-2 [Gew.-%] | - | - | |
| ii-1 [Gew.-%] | 19 | - | |
| ii-1-Anteil^{*} | 26,6 | 0 | |
| iii-1 [Gew.-%] | 14 | 14 | |
| iv-1 [Gew.-%] | 6 | 6 | |
| v-1 [Gew.-%] | 8 | 8 | |
| vi-1 [Gew.-%] | 0,5 | 0,5 | |
| | | | |
| Teilchengröße < 100 | | | |
| µm | | | |
| Abbau nach 180 Tagen | 58,30 % | 45,50 % | 86,2 % |

| | | | |
|---|---|---|---|
| *Anteil der Komponente ii-1, bezogen auf das Gesamtgewicht der Komponenten i und ii | | | |

Die Polyester I bauen im Boden im Gegensatz zu den Polyestern II gut ab. Umso überraschender war, dass die erfindungsgemäße Mischung aus einem Polyester I und einem Polyester II nochmals deutlich schneller im Boden abbaut als der Polyester I und damit besser als jede der beiden Einzelkomponenten.

**Tabelle 3: Weiterreißfestigkeit und Dart Drop von 30 µm dicken Folien**

| Beispiel | 3 | 4 | 5 | V6 | V2-a | V1-b |
|---|---|---|---|---|---|---|
| i-1 [Gew.-%] | 64,35 | 57,2 | 52,5 | 28,6 | - | |
| i-2 [Gew.-%] | - | - | - | - | | 71,5 |
| ii-1 [Gew.-%] | 7,15 | 14,3 | 19 | 42,9 | 71,5 | - |
| ii-1-Anteil^{*} | 10 | 20 | 26,6 | 60 | 100 | 0 |
| iii-1 [Gew.-%] | 14 | 14 | 14 | 14 | 14 | 14 |
| iv-1 [Gew.-%] | 6 | 6 | 6 | 6 | 6 | 6 |
| v-1 [Gew.-%] | 8 | 8 | 8 | 8 | 8 | 8 |
| vi-1 [Gew.-%] | 0,5 | 0,5 | 0,5 | 0,5 | 0,5 | 0,5 |
| | | | | | | |
| Foliendicke [µm] | 30 | 30 | 30 | 30 | 30 | 30 |
| Weiterreißfestigkeit bei 800 g längs [mN] | 6052 | 5815 | 5948 | 3321 | 1743 | 4154 |
| Quer [mN] | 4772 | 3499 | 3615 | 1660 | 1933 | 5937 |
| Dart Drop Methode A [g] | 172,5 | 194,3 | 184,5 | 208,5 | 304,5 | 153,0 |

| | | | | | | |
|---|---|---|---|---|---|---|
| *Anteil der Komponente ii-1, bezogen auf das Gesamtgewicht der Komponenten i und ii | | | | | | |

Die Versuche zeigen, dass gefüllte Polyester II (s. V2-a) über eine sehr gute Durchstoßfestigkeit (Dart Drop) verfügen, während gefüllte Polyester I (s. V1-b) über eine sehr gute Weiterreißfestigkeit verfügen. Die erfindungsgemäßen Polyestermischungen (s. Beispiele 3 bis 5) verfügen sowohl über eine sehr gute Weiterreißfestigkeit wie eine gute Durchstoßfestigkeit (Dart Drop).

## Patentansprüche

1. Biologisch abbaubare Polyestermischung enthaltend:
i) 71 bis 91 Gew.-%, bezogen auf das Gesamtgewicht der Komponenten i und ii, eines Polyesters I, der aufgebaut ist aus:
a-1) 40 bis 70 mol%, bezogen auf die Komponenten a und b, einer aliphatischen C₉-C₁₈-Dicarbonsäure oder eines C₉-C₁₈-Dicarbonsäure-Derivats;
b-1) 30 bis 60 mol%, bezogen auf die Komponenten a und b, Terephthalsäure oder eines Terephthalsäurederivats;
c-1) 98 bis 100 mol%, bezogen auf die Komponenten a und b, eines C₃-C₆-Diols;
d-1) 0 bis 2 Gew.-%, bezogen auf das Gesamtgewicht der Komponenten a bis e, eines mindestens dreiwertigen Alkohols;
e-1) 0 bis 2 Gew.-%, bezogen auf das Gesamtgewicht der Komponenten a bis e, eines Kettenverlängerers; und
ii) 9 bis 29 Gew.-%, bezogen auf das Gesamtgewicht der Komponenten i und ii, eines Polyesters II, der aufgebaut ist aus:
a-2) 40 bis 70 mol%, bezogen auf die Komponenten a und b, einer aliphatischen C₄-C₆-Dicarbonsäure oder eines C₄-C₆-Dicarbonsäure-Derivats;
b-2) 30 bis 60 mol%, bezogen auf die Komponenten a und b, Terephthalsäure oder eines Terephthalsäurederivats;
c-2) 98 bis 100 mol%, bezogen auf die Komponenten a und b, eines C₃-C₆-Diols;
d-2) 0 bis 2 Gew.-%, bezogen auf das Gesamtgewicht der Komponenten bis e, eines mindestens dreiwertigen Alkohols;
e-2) 0 bis 2 Gew.-%, bezogen auf das Gesamtgewicht der Komponenten a bis e, eines Kettenverlängerers.

2. Biologisch abbaubare Polyestermischung nach Anspruch 1, wobei die Disäurekomponente a-1 des Polyesters I Sebazinsäure oder ein Sebazinsäurederivat ist.

3. Biologisch abbaubare Polyestermischung nach Anspruch 1 oder 2, wobei die Disäurekomponente a-2 des Polyesters II Adipinsäure oder ein Adipinsäurederivat ist.

4. Biologisch abbaubare Polyestermischung nach einem der Ansprüche 1 bis 3, wobei 10 bis 35 Gew.-%, bezogen auf das Gesamtgewicht der der Polymermischung, eines oder mehrerer Füllstoffe ausgewählt aus der Gruppe bestehend aus: Calciumcarbonat, Talk, Graphit, Gips, Ruß, Eisenoxid, Calciumchlorid, Kaolin, Siliziumdioxid (Quarz), Natriumcarbonat, Titandioxid, Silikat, Wollastonit, Glimmer, Montmorillonite, Mineralfasern und Naturfasern eingesetzt werden.

5. Biologisch abbaubare Polyestermischung nach Anspruch 4, wobei als Füllstoffe Calciumcarbonat und/oder Talk eingesetzt werden.

6. Biologisch abbaubare Polyestermischung nach Anspruch 4, wobei als Füllstoffe:
iii) 10 bis 25 Gew:-%, bezogen auf das Gesamtgewicht der Polymermischung, Calciumcarbonat; und
iv) 3 bis 10 Gew:-%, bezogen auf das Gesamtgewicht der Polymermischung, Talk eingesetzt werden.

7. Biologisch abbaubare Polyestermischung nach einem der Ansprüche 1 bis 6, wobei 0 bis 50 Gew.-%, bezogen auf das Gesamtgewicht der Polymermischung, eines oder mehrerer Polymere v) ausgewählt aus der Gruppe bestehend aus:
Polymilchsäure, Polycaprolacton, Polyhydroxyalkanoat, Stärke oder Polyester, hergestellt aus aliphatischen Dicarbonsäuren und einer aliphatischen Dihydroxyverbindung zugesetzt werden.

8. Biologisch abbaubare Polyestermischung nach Anspruch 7, wobei 5 bis 45 Gew.-%, bezogen auf das Gesamtgewicht der Polymermischung, Polycaprolacton (PCL) oder ein aliphatischer Polyester ausgewählt aus der Gruppe bestehend aus: Polybutylensuccinat (PBS), Polybutylenadipat (PBA), Polybutylensuccinatadipat (PBSA), Polybutylensuccinatsebacat (PBSSe), Polybutylensebacat (PBSe), Polyethylensuccinat (PES) und Polycaprolacton (PCL) eingesetzt werden.

9. Biologisch abbaubare Polyestermischung nach Anspruch 7, wobei 5 bis 45 Gew.-%, bezogen auf das Gesamtgewicht der Polymermischung, Stärke und/oder ein Polyhydroxyalkanoat, eingesetzt werden.

10. Biologisch abbaubare Polyestermischung nach Anspruch 7, wobei 5 bis 25 Gew.-%, bezogen auf das Gesamtgewicht der Polymermischung, Polymilchsäure eingesetzt werden

11. Biologisch abbaubare Polyestermischung nach einem der Ansprüche 1 bis 10, wobei 0,1 bis 1,5 Gew.-%, bezogen auf das Gesamtgewicht der Polymermischung, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs eingesetzt werden.

12. Verwendung der Polyestermischung nach einem der Ansprüche 1 bis 11 zur Herstellung von Einkaufstaschen, Kompostbeuteln oder Inlinern für die Biomülltonne.

13. Verwendung der Polyestermischung nach einem der Ansprüche 1 bis 11 zur Herstellung von Agrarprodukten ausgewählt aus der Gruppe bestehend aus Mulchfolien, Abdeckfolien, Schaumpartikel zur Bodenbelüftung, Silo-Folien, Folienbändchen, Geweben, Vlies-Stoffen, Clips, Textilien, Zwirnen, Fischernetzen, Umverpackungen, Schwergutsäcken und Blumentöpfen.

## Claims

1. A biodegradable polyester mixture comprising:
i) 71 to 91 wt%, based on the total weight of components i and ii, of a polyester I constructed from:
a-1) 40 to 70 mol%, based on components a and b, of an aliphatic C₉-C₁₈ dicarboxylic acid or of a C₉-C₁₈ dicarboxylic acid derivative;
b-1) 30 to 60 mol%, based on components a and b, of terephthalic acid or of a terephthalic acid derivative;
c-1) 98 to 100 mol%, based on components a and b, of a C₃-C₆ diol;
d-1) 0 to 2 wt%, based on the total weight of components a to e, of an at least trihydric alcohol;
e-1) 0 to 2 wt%, based on the total weight of components a to e, of a chain extender, and
ii) 9 to 29 wt%, based on the total weight of components i and ii, of a polyester II constructed from:
a-2) 40 to 70 mol%, based on components a and b, of an aliphatic C₄-C₆ dicarboxylic acid or of a C₄-C₆ dicarboxylic acid derivative;
b-2) 30 to 60 mol%, based on components a and b, of terephthalic acid or of a terephthalic acid derivative;
c-2) 98 to 100 mol%, based on components a and b, of a C₃-C₆ diol;
d-2) 0 to 2 wt%, based on the total weight of the components to e, of an at least trihydric alcohol;
e-2) 0 to 2 wt%, based on the total weight of components a to e, of a chain extender.

2. The biodegradable polyester mixture according to claim 1 wherein said diacid component a-1 of polyester I is sebacic acid or a sebacic acid derivative.

3. The biodegradable polyester mixture according to claim 1 or 2 wherein said diacid component a-2 of polyester II is adipic acid or an adipic acid derivative.

4. The biodegradable polyester mixture according to any one of claims 1 to 3 utilizing from 10 to 35 wt%, based on the total weight of the of the polymer mixture, of one or more fillers selected from the group consisting of calcium carbonate, talc, graphite, gypsum, carbon black, iron oxide, calcium chloride, kaolin, silicon dioxide (quartz), sodium carbonate, titanium dioxide, silicate, wollastonite, mica, montmorillonites, mineral fibers and natural fibers.

5. The biodegradable polyester mixture according to claim 4 wherein calcium carbonate and/or talc are used as fillers.

6. The biodegradable polyester mixture according to claim 4 utilizing as fillers:
iii) 10 to 25 wt%, based on the total weight of the polymer mixture, of calcium carbonate; and
iv) 3 to 10 wt%, based on the total weight of the polymer mixture, of talc.

7. The biodegradable polyester mixture according to any one of claims 1 to 6 incorporating an added 0 to 50 wt%, based on the total weight of the polymer mixture, of one or more polymers v) selected from the group consisting of polylactic acid, polycaprolactone, polyhydroxyalkanoate, starch or polyester prepared from aliphatic dicarboxylic acids and an aliphatic dihydroxy compound.

8. The biodegradable polyester mixture according to claim 7 utilizing from 5 to 45 wt%, based on the total weight of the polymer mixture, of polycaprolactone (PCL) or of an aliphatic polyester selected from the group consisting of polybutylene succinate (PBS), polybutylene adipate (PBA), polybutylene succinate adipate (PBSA), polybutylene succinate sebacate (PBSSe), polybutylene sebacate (PBSe), polyethylene succinate (PES) and polycaprolactone (PCL).

9. The biodegradable polyester mixture according to claim 7 utilizing from 5 to 45 wt%, based on the total weight of the polymer mixture, of starch and/or of a polyhydroxyalkanoate.

10. The biodegradable polyester mixture according to claim 7 utilizing from 5 to 25 wt%, based on the total weight of the polymer mixture, of polylactic acid.

11. The biodegradable polyester mixture according to any one of claims 1 to 10 utilizing from 0.1 to 1.5 wt%, based on the total weight of the polymer mixture, of one or more than one stabilizer, nucleating agent, glide and release agent, surfactant, wax, antistat, antifoggant, dye, pigment, UV absorber, UV stabilizer or other plastics additive.

12. The use of the polyester mixture according to any one of claims 1 to 11 in the manufacture of shopping bags, compost bags or inliners for a biowaste bin.

13. The use of the polyester mixture according to any one of claims 1 to 11 in the manufacture of agriproducts selected from the group consisting of mulch films, covering films, bead foam for soil aeration, silo films, slit film tapes, wovens, nonwovens, clips, textiles, threads, fishing nets, secondary packaging, heavy-duty bags and flowerpots.

## Revendications

1. Mélange biodégradable de polyesters de polyesters, contenant :
i) 71 à 91 % en poids, par rapport au poids total des composants i et ii, d'un polyester I, qui est constitué de :
a-1) 40 à 70 % en moles, par rapport aux composants a et b, d'un acide dicarboxylique aliphatique en C₉-C₁₈ ou d'un dérivé d'un acide dicarboxylique en C₉-C₁₈ ;
b-1) 30 à 60 % en moles, par rapport aux composants a et b, d'acide téréphtalique ou d'un dérivé de l'acide téréphtalique ;
c-1) 98 à 100 % en moles, par rapport aux composants a et b, d'un diol en C₃-C₆ ;
d-1) 0 à 2 % en poids, par rapport au poids total des composants a à e, d'un alcool au moins trivalent ;
e-1) 0 à 2 % en poids, par rapport au poids total des composants a à e, d'un extendeur de chaîne ; et
ii) 9 à 29 % en poids, par rapport au poids total des composants i et ii, d'un polyester II, qui est constitué de :
a-2) 40 à 70 % en moles, par rapport aux composants a et b, d'un acide dicarboxylique aliphatique en C₄-C₆ ou d'un dérivé d'un acide dicarboxylique en C₄-C₆ ;
b-2) 30 à 60 % en moles, par rapport aux composants a et b, d'acide téréphtalique ou d'un dérivé de l'acide téréphtalique ;
c-2) 98 à 100 % en moles, par rapport aux composants a et b, d'un diol en C₃-C₆ ;
d-2) 0 à 2 % en poids, par rapport au poids total des composants à e, d'un alcool au moins trivalent ;
e-2) 0 à 2 % en poids, par rapport au poids total des composants a à e, d'un extendeur de chaîne.

2. Mélange biodégradable de polyesters selon la revendication 1, dans lequel le composant diacide a-1 du polyester I est l'acide sébacique ou un dérivé de l'acide sébacique.

3. Mélange biodégradable de polyesters selon la revendication 1 ou 2, dans lequel le composant diacide a-2 du polyester II est l'acide adipique ou un dérivé de l'acide adipique.

4. Mélange biodégradable de polyesters selon l'une des revendications 1 à 3, dans lequel on utilise 10 à 35 % en poids, par rapport au poids total du du mélange de polymères, une ou plusieurs charges choisies dans le groupe consistant en le carbonate de calcium, le talc, le graphite, le gypse, le noir de carbone, l'oxyde de fer, le chlorure de calcium, le kaolin, le dioxyde de silicium (quartz), le carbonate de sodium, le dioxyde de titane, un silicate, la wollastonite, le mica, les montmorillonites, les fibres minérales ou les fibres naturelles.

5. Mélange biodégradable de polyesters selon la revendication 4, dans lequel on utilise en tant que charges du carbonate de calcium et/ou du talc.

6. Mélange biodégradable de polyesters selon la revendication 4, dans lequel on utilise en tant que charges
iii) 10 à 25 % en poids, par rapport au poids total du mélange de polymères, de carbonate de calcium ; et
iv) 3 à 10 % en poids, par rapport au poids total du mélange de polymères, de talc.

7. Mélange biodégradable de polyesters selon l'une des revendications 1 à 6, dans lequel on ajoute 0 à 50 % en poids, par rapport au poids total du mélange de polymères, d'un ou plusieurs polymères v) choisis dans le groupe consistant en le poly(acide lactique), la polycaprolactone, un polyhydroxyalcanoate, l'amidon ou les polyesters préparés à partir d'acides dicarboxyliques aliphatiques et d'un composé dihydroxylé aliphatique.

8. Mélange biodégradable de polyesters selon la revendication 7, dans lequel on utilise 5 à 45 % en poids, par rapport au poids total du mélange de polymères, de polycaprolactone (PCL) ou d'un polyester aliphatique choisi dans le groupe consistant en le poly(succinate de butylène) (PBS), le poly(adipate de butylène) (PBA), le poly(succinate-adipate de butylène) (PBSA), le poly(succinate-sébaçate de butylène) (PBSSe), le poly(sébaçate de butylène) (PBSe), le poly(succinate d'éthylène) (PES) et la polycaprolactone (PCL).

9. Mélange biodégradable de polyesters selon la revendication 7, dans lequel on utilise 5 à 45 % en poids, par rapport au poids total du mélange de polymères, d'amidon et/ou d'un polyhydroxyalcanoate.

10. Mélange biodégradable de polyesters selon la revendication 7, dans lequel on utilise 5 à 25 % en poids, par rapport au poids total du mélange de polymères, de poly(acide lactique).

11. Mélange biodégradable de polyesters selon l'une des revendications 1 à 10, dans lequel on utilise 0,1 à 1,5 % en poids, par rapport au poids total du mélange de polymères, d'au moins un stabilisant, un agent de nucléation, un lubrifiant et agent de démoulage, un tensioactif, une cire, un antistatique, un agent anti-voile, un colorant, un pigment, un absorbant UV, un stabilisateur UV ou un autre additif pour matière plastique.

12. Utilisation du mélange de polyesters selon l'une des revendications 1 à 11 pour fabriquer des sacs à provisions, des sachets de compost ou des revêtements intérieurs pour poubelles pour déchets organiques.

13. Utilisation du mélange de polyesters selon l'une des revendications 1 à 11 pour la fabrication de produits à usage agricole choisis dans le groupe consistant en les feuilles de mulch, les feuilles de recouvrement, les particules de mousse pour aération du sol, les feuilles pour silos, les bandelettes, les tissus, les matériaux non-tissés, les clips, les textiles, les fils retors, les filets de pêche, les suremballages, les sacs pour objets pesants, et les pots à fleurs.
